# EUROPEAN PATENT SPECIFICATION

(11) **EP 1 079 712 B1**
(45) Date of publication and mention of the grant of the patent: **19.03.2003**
(21) Application number: 99919967.2
(22) Date of filing: 22.04.1999
(51) Int. Cl.: A46D 3/00, A46D 3/08, A46D 9/02, B23Q 7/00, B29C 45/14

(54) **AUTOMATED PROCESS AND APPARATUS FOR SUBSTANTIALLY SIMULTANEOUSLY FORMING MULTIPLE ARTICLES HAVING DIFFERENT PROPERTIES**
AUTOMATISIERTES VERFAHREN UND GERÄT ZUM ANNÄHERND GLEICHZEITIGEN FORMEN VERSCHIEDENER ARTIKEL MIT UNTERSCHIEDLICHEN EIGENSCHAFTEN
PROCEDE ET APPAREIL AUTOMATISES POUR FORMER DE MULTIPLES ARTICLES AYANT DIFFERENTES PROPRIETES

(30) Priority: 28.04.1998 US 67728; 16.04.1999 US 293019
(43) Date of publication of application: 07.03.2001
(73) Proprietor: GILLETTE CANADA COMPANY, Mississauga, Ontario L4Z 4C5 (CA)
(72) Inventor: CONNOLLY, Declan, County Kildare (IE); FRYAUF, Michael, F., West Branch, IA 52358 (US); MCCONNELL, Mark, Naas, County Kildare (IE); SZCZECH, Gerald, S., Iowa City, IA 52246 (US)
(74) Representative: Ebner von Eschenbach, Jennifer
(86) International application number: US9908819
(87) International publication number: WO99055193

(56) References cited:
- EP-A- 0 563 419
- DE-A- 4 423 145
- DE-A- 19 522 122
- DE-A- 19 542 102

## Description

The invention relates to manufacturing articles, and in particular to manufacturing toothbrushes.

Toothbrushes generally include a toothbrush body that includes a handle portion and a head portion, and tufts of bristles located at or near the head portion.

Toothbrush bodies are generally made by injection molding machines. These toothbrush bodies often consist of plastic and include multiple components. The different components may differ in nature, color, texture, density, and hardness. For example, toothbrush bodies may include a relatively hard plastic base component and a colored rubberized gripping component.

After the toothbrush bodies are manufactured they are automatically removed from the molding machine and deposited onto a cooling conveyor. The cooling conveyor transports the toothbrush bodies to a bin. The bodies are then manually transported to a bristle tufting machine where they receive tufts of bristles and are formed into toothbrushes.

The tufting operation generally involves manually grabbing handfuls of differently colored toothbrush bodies so as to provide a mixture of differently colored toothbrush bodies to a hopper. A conveyor removes the toothbrush bodies randomly from the hopper and orients the bodies so that the head portion of the body is available to receive the tufts of bristles from the bristle tufting machine. The bristle tufting machine automatically staples tufts of bristles into the head of each toothbrush body to form a toothbrush. The finished toothbrushes are automatically deposited into a tray which is manually transported to a packaging machine.

Typical process for producing toothbrushes including molding, tufting and/or finishing operations are described in, for example, DE 4423145, EP 0563419, DE 19542102 and DE 19522122.

In one aspect, the invention features an apparatus for manufacturing toothbrushes that includes: (a) a molding unit for substantially simultaneously molding toothbrush bodies, (b) an element that removes toothbrush bodies from the molding unit, (c) a tufter for securing tufts of bristles to toothbrush bodies to form toothbrushes, and (d) a transport for automatically moving toothbrush bodies from the removal element to the tufter. Preferably the removal element is capable of removing toothbrush bodies form the molding unit in the form of an array and maintaining toothbrush bodies in the array. In one embodiment, the transport sequentially provides individual toothbrush bodies from an array to the tufter. In another embodiment, the transport includes an element that selects toothbrush bodies having different properties (e.g., colors), and the transport automatically moves selected toothbrush bodies to the tufter.

In one embodiment, the molding unit includes a first cavity defining a toothbrush body, a first injection unit in fluid communication with the first cavity, and a second injection unit also in fluid communication with the first cavity. In another embodiment, the molding unit further includes a second cavity defining a second toothbrush body, and a third cavity defining a third toothbrush body. The first injection unit is in fluid communication with the first cavity and the second cavity, and the second injection unit is in fluid communication with the first cavity and the third cavity. The injection units are capable of substantially simultaneously injecting a first molding compound having a first property into the second cavity to form a toothbrush body having a first property, injecting a second compound having a second property into the third cavity to form a toothbrush body having a second property, and injecting either the first or the second molding compound into the first cavity to form a toothbrush body having a property corresponding to the injected molding compound.

In other embodiments, the molding unit includes a first cavity defining a toothbrush body and a second cavity defining a toothbrush body, and the first injection unit is in fluid communication with the first cavity, and the second injection unit is in fluid communication with said second cavity. In preferred embodiments, the first cavity and the second cavity define substantially similar toothbrush bodies. In one embodiment, the injection units are capable of substantially simultaneously injecting a first molding compound into the first cavity, and injecting a second molding compound into the second cavity.

The transport preferably includes a first conveyor for moving toothbrush bodies from an array to the tufter; and a second conveyor for receiving the array from the removal element and moving the array to the first conveyor. In one embodiment, the element for removing and the transport are provided in the form of an automated mechanical transfer unit. In a preferred embodiment, the transport is capable of selecting toothbrush bodies to create an array of toothbrush bodies having different properties (e.g., colors).

In another embodiment, the apparatus further includes a packaging machine that packages individual toothbrushes, and a second transport for automatically moving toothbrushes from the tufter to the packaging machine. In one embodiment the first transport, the removal element, and the second transport are provided in the form of an automated mechanical transfer unit. In another embodiment, the apparatus further includes a second packaging machine for automatically packaging packaged toothbrushes into a second package such that the second package contains a plurality of toothbrushes having different properties (e.g., colors).

In another aspect, the invention features a process for forming toothbrushes having different properties. The process includes substantially simultaneously forming toothbrush bodies having different properties in one mold, automatically transporting the toothbrush bodies to a tufter, and securing tufts of bristles to the toothbrush bodies to form toothbrushes having different properties (e.g., colors). In one embodiment, the step of forming toothbrush bodies includes forming toothbrush bodies that are substantially similar in shape. In another embodiment, the process further includes automatically transporting the toothbrushes from the tufter to a packaging machine, and automatically packaging the toothbrushes. In other embodiments, the process further includes selecting toothbrush bodies (e.g., to create an array of differently colored toothbrush bodies) prior to automatically transporting the toothbrush bodies to a tufter.

In another aspect, the invention features an apparatus for manufacturing articles having different properties. The apparatus includes a molding unit for substantially simultaneously molding articles having different properties; an element that removes the articles from the mold cavities; a packaging machine for automatically packaging the articles; and a transport for automatically moving the articles from the removal element to the packaging machine.

In other aspects, the invention features a process for forming articles having different properties from a mold that includes cavities defining substantially similar articles. The process includes substantially simultaneously forming articles having different properties in the mold, automatically transporting the articles to a packaging machine, and packaging the articles to form packaged articles having different properties.

In one embodiment, the invention features an apparatus for manufacturing at least one article. The apparatus includes: a molding unit for molding an article where the molding unit includes a first cavity defining an article, a first injection unit in fluid communication with the first cavity, and a second injection unit also in fluid communication with the first cavity; an element that removes the article from the molding unit; a packaging machine for automatically packaging the article; and a transport for automatically moving the article from the removal element to the packaging machine.

As used herein, the term "toothbrush body" is intended to refer to any portion of the toothbrush body, e.g., the entire toothbrush body including the head portion and the handle portion; the head portion; the handle portion; portions of the head portion; and portions of the handle portion.

The invention permits the manufacture of articles (e.g., toothbrush bodies) having a predetermined variety of properties (e.g., different colors) from a single mold in a single molding cycle. This in turn allows control over the subsequent manufacture and packaging of toothbrushes such that single packages of multiple toothbrushes can be manufactured where each package contains a predetermined multiple of toothbrushes having different properties (e.g., a predetermined number of red, yellow or blue handled toothbrushes in a single package). The invention also permits the selection of a predetermined variety of articles to achieve an array of articles having a variety of properties. The present invention thus avoids the need for manual intervention or assistance in the mixing of toothbrushes to achieve a desired mixture of toothbrushes having different properties in a single package. The apparatus also provides control over the color mixture in each package of toothbrushes shipped to a customer.

The arrangement of the injection units in the molding unit also advantageously permits variation in injection timing which allows molding compounds having differing cure rates to be injected into mold cavities at different times so that cure is completed substantially simultaneously for each molding compound. This allows a single mold cycle to accommodate a variety of molding compounds.

The apparatus of the present invention is also capable of producing an ordered array of toothbrush bodies and maintaining the relative order of the toothbrush bodies throughout the manufacturing process. Maintenance of the ordered array also simultaneously maintains the orientation of the toothbrush bodies, which facilitates tufting and packaging processes.

Other features and advantages of the invention will become apparent from the following description of the preferred embodiments thereof, and from the claims.

Fig. 1 is a perspective view of a toothbrush body.

Fig. 2 is a schematic view of one embodiment of the toothbrush manufacturing apparatus of the present invention.

Fig. 3. is a cross section view taken along line A-A' of the injection molding unit of the apparatus Fig. 2.

Fig. 4 is a top view of one embodiment of the conveyor of the apparatus of Fig. 2.

Fig. 5 is a side view of the automated mechanical transfer and the conveyors of the apparatus of Fig. 2.

Fig. 6 is a perspective view of one end of another embodiment of the conveyor of Fig. 2.

Fig. 7 is a schematic view of another embodiment of the toothbrush manufacturing apparatus of the present invention.

Fig. 8 is a view taken in cross section along line B-B' of the molding unit of Fig. 7.

Fig. 9 is an enlarged top view of one part of the molding unit of Fig. 7.

Fig. 10 is an enlarged, rotated top view of a portion of the mold of Fig. 7.

Fig. 11 is a perspective view of one embodiment of the packaging unit of the apparatus of Fig. 7.

Fig. 12 is a side view of one embodiment of the packaging unit of Fig. 11.

Fig. 13 is a perspective view of another embodiment of the packaging unit of the apparatus of Fig. 7.

Fig. 14 is a schematic view of another embodiment of the manufacturing apparatus of the present invention.

The invention features an apparatus and method for the automated manufacture of a plurality of articles. The apparatus is capable of permitting the selective manufacture of a plurality of articles having pre-selected properties in a single molding cycle. The invention also features an apparatus that is capable of simultaneous manufacture of a plurality of articles that differ from each other in at least one property (e.g., color, composition, texture, density, and hardness). The invention is particularly useful for toothbrush manufacturing and is described below with reference to toothbrushes, however, it is to be understood that the invention is applicable to any molded article.

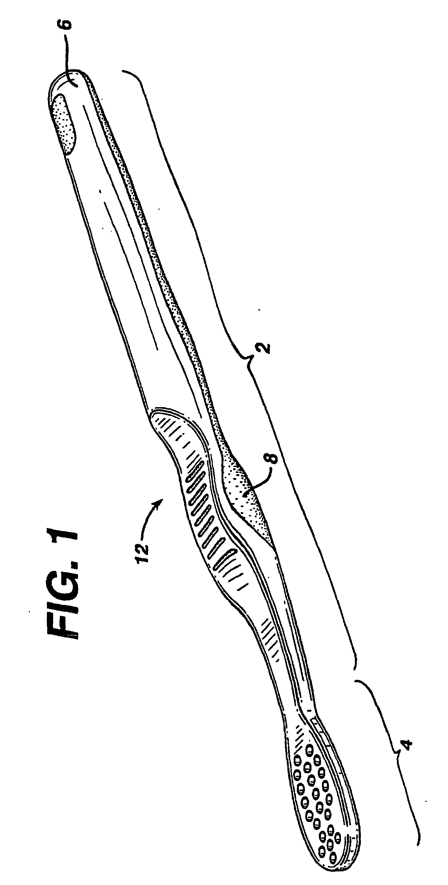

Referring to Fig. 1, toothbrush body 12 includes handle portion 2 and head portion 4. Toothbrush body 12 can further include a base member 6, e.g., a portion made from a relatively harder, more rigid plastic such as polypropylene, and a gripping member 8, e.g., a portion made from a relatively rubbery material such as, e.g., styrene-butadiene-styrene triblock copolymer (commercially available under the trade designation Kraton from Shell Chemical Co.). Multiple component toothbrush bodies are described, e.g., in U.S. Patent No. 5,256,048 (Jacobs et al.).

The apparatus for manufacturing toothbrushes having toothbrush bodies of different properties will now be described using color as the property that differs. It is intended that the property that differs could be at least one of a variety of properties including, e.g., color, composition, texture, density, hardness, and various combinations thereof.

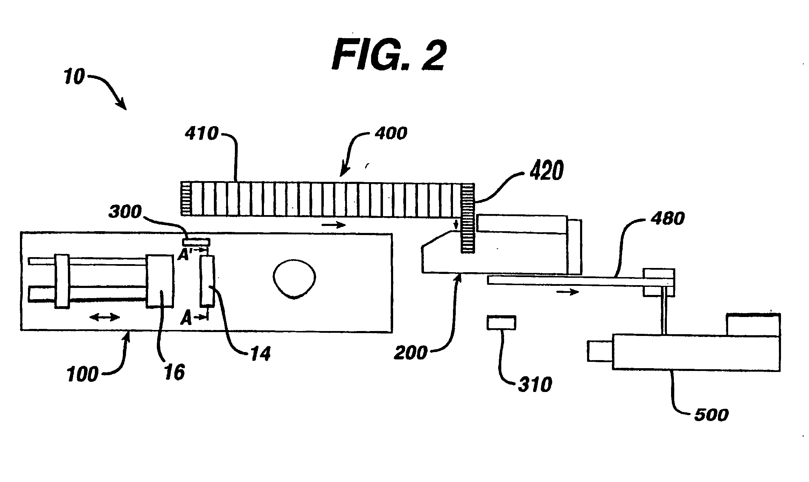

Referring to Fig. 2, toothbrush manufacturing apparatus 10 includes a horizontally mounted injection molding unit 100 that forms toothbrush bodies 12, e.g. the relatively more rubbery gripping portion of a multi-component toothbrush handle. An automated mechanical transfer 300 removes the molded bodies 12 from molding unit 100 and loads them onto conveyor 400, which transports the molded bodies to tufter 200. Tufter 200 secures tufts of bristles to toothbrush body 12 to form the finished toothbrush. A second automated mechanical transfer 310 automatically picks the finished toothbrush and places it on conveyor 480 which moves the toothbrush to packaging unit 500. Packaging unit 500 encases the finished toothbrush in a packaging material, e.g., a blister pack, or a box and cellophane, to form a packaged toothbrush. The packaged toothbrush can then be transported (e.g., by automated transport or conveyor) to a second packaging machine (not shown) where a number individually packaged toothbrushes are packaged together to form a second package.

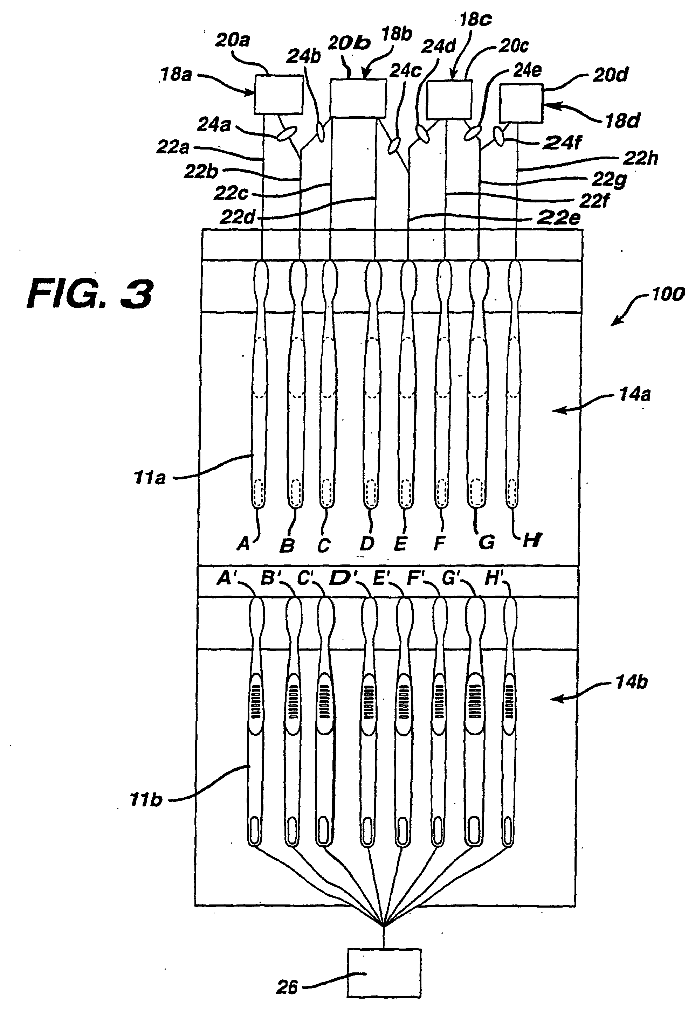

Referring to Figs. 2 and 3, horizontally mounted injection molding unit 100 includes a stationary mold part 14 and a mobile mold part 16. Mobile mold part 16 travels along a horizontal path between a closed position in which mold parts 16, 14 are in sealing contact with each other, and an open position, in which mobile mold part 16 and stationary mold part 14 are separated by a distance to allow automated mechanical transfer 300 access to the formed bodies 12.

In the closed position, mold parts 14 and 16 define a first set 14a of mold cavities A, B, C, D, E, F, G and H, each of which defines a portion 11 a of a toothbrush body 12, e.g., the rubberized gripper portion of the toothbrush body. The portion of each mold cavity A-H located on mold part 14 is shown in Fig. 3. The mold cavities can define the entire toothbrush body, i.e., the handle portion and the head portion, or a portion of the toothbrush body.

Molding unit 100 also includes injection units 18a- 18d, which are in fluid communication with mold cavities A-H. Injection units 18a-18d are capable of injecting liquid molding compound into mold cavities A-H.

Each injection unit includes a reservoir 20a-20d for holding a molding compound, and conduits 22a-22h through which a molding compound can pass from a reservoir to a mold cavity. Preferably each reservoir contains a molding compound having a different color such that each mold cycle produces toothbrush bodies of different colors; preferably each mold cycle produces at least four differently colored toothbrush bodies, e.g., two blue, two red, two green, and two yellow toothbrush bodies.

Referring to Fig. 3, reservoir 20a of injection unit 18a is connected to cavities A and B via conduits 22a and 22b respectively. Similarly, reservoir 20b is connected to cavities B, C, D and E via conduits 22b-22e respectively. Reservoir 20c is connected to cavities E-G via conduits 22e and 22g, and reservoir 2Od is connected to cavities G and H via conduits 22g and 22h respectively. Injection unit 18b shares conduit 22b with injection unit 18a and conduit 22c with injection unit 18c. Injection units 18c and 18d share conduit 22f.

Fluid communication between the injection units and the mold cavities can be controlled by gating manifolds 24a-24f which open and close the fluid communication between reservoirs 20a-20b, and cavities B, E and G. Gating manifolds 24a and 24b, for example, can be placed in an open position or a closed position to regulate the fluid communication between reservoirs 20a and 20b and cavity B. When gating manifold 24a is in an open position, reservoir 20a is in fluid communication with cavity B such that a molding compound in reservoir 24a can travel through conduit 22b to cavity B. When gating manifold 24a is in the open position, manifold 24b can be in the open or closed position to maintain or close communication between reservoir 20b and cavity B. When manifold 24b is in the closed position molding compound is prevented from flowing from reservoir 20b to cavity B.

In an alternate embodiment, a single manifold can be used to open communication between an injection unit and a cavity and simultaneously close communication between another injection unit and the same cavity and vice versa. Referring to cavity B, for example, a single manifold can open communication between injection unit 18a and cavity B and simultaneously close communication between injection unit 18b and cavity B.

Gating manifolds 24a-24f allow a number of toothbrush bodies having a variety of different colors to be manufactured simultaneously. By opening and closing the various manifolds, the number and variety of toothbrush bodies can be altered. In addition, by including injection units having more than one common conduit leading to more than one common cavity, the degrees of freedom, in terms of available color variety, are increased. For example, referring to Fig. 3, the molding compound in reservoir 20b can be transferred to two, three or four cavities depending upon the configuration of gating manifolds 24b and 24c. The molding compound in reservoir 20c can be transferred to one, two or three cavities and the molding compounds in reservoirs 20a and 20d can be transferred to one or two cavities.

Although the molding unit is described as having eight mold cavities and four injection units, it is contemplated that any number of molding cavities and injection units could be placed in fluid communication with each other in various permutations. In addition, gating devices can be positioned as desired to control the flow of molding compound to the cavities.

The injection molding unit can further include a second set 14b of mold cavities A'-H', each of which defines a second portion 11b of toothbrush body 12, e.g., the relatively hard, more rigid plastic (e.g., polypropylene) base portion of the toothbrush body. The second portion 11b of toothbrush body 12 defined by mold cavities A'-H' is different (e.g., in shape, dimension and combinations thereof) from that portion 11a of toothbrush body 12 defined by cavities A-H. Injection unit 19 is in fluid communication with mold cavities A'-H' and is capable of injecting molding compound into mold cavities A'-H' to form second portion 11b of toothbrush body 12. Preferably portion 11b of toothbrush body 12 is formed first and then portion 11b is transferred (e.g., by automated mechanical transfer) to the first set 14a of mold cavities A-H (e.g., portion 11b of toothbrush body formed in cavity A' is transferred to cavity A) where colored molding compound is injected into cavities A-H to form a dual component toothbrush body, and where processing continues as described above.

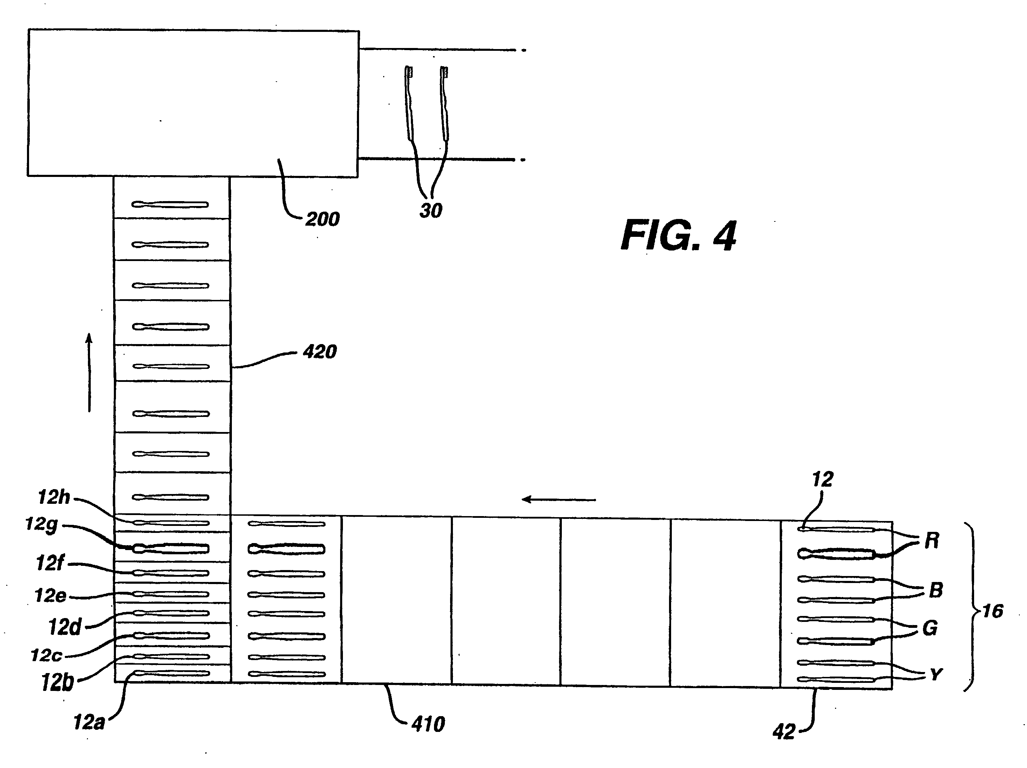

Referring to Figs. 2 and 4, automated mechanical transfer 300 assists in removing toothbrush bodies 12 from the mold cavities (e.g., mold cavities A-H) and transferring toothbrush bodies 12 to conveyor 400. Automated mechanical transfer 300 preferably removes each toothbrush body 12a-12e simultaneously from injection molding unit 100 and transfers the bodies to a first position 42 on conveyor 400. More preferably, automated mechanical transfer 300 simultaneously picks the entire array 16 of toothbrush bodies 12a-12e and places the array 16 onto conveyor 400 in the same order in which the bodies were formed. Automated mechanical transfer 300 is also capable of orienting the individual toothbrush bodies 12, or the entire array 16 of toothbrush bodies 12a-12e, such that the head portions of the toothbrush bodies 12 are in proper orientation for transfer to subsequent operations (e.g., bristle tufting machine 200 or packaging).

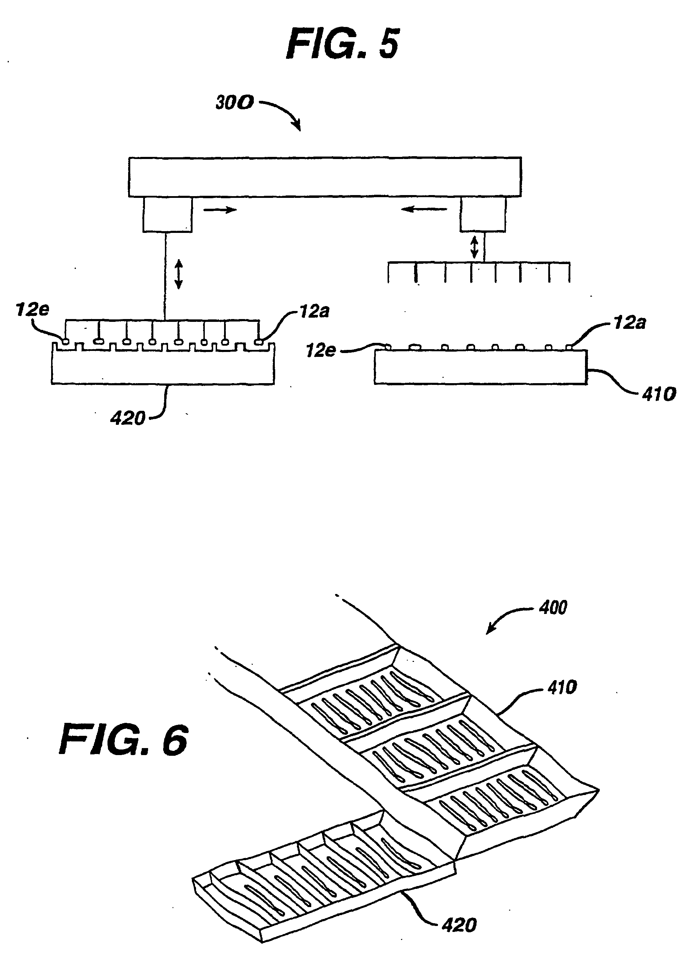

Referring to Figs. 4-6, conveyor 400 includes a first conveyor 410, e.g., a nested cooling conveyor, for receiving and cooling toothbrush bodies 12, and a second conveyor 420, e.g., a walking beam conveyor, for sequentially feeding toothbrush bodies 12 to tufter 200. First conveyor 410 moves toothbrush bodies 12 to second conveyor 420 while maintaining toothbrush bodies 12 in the order in which they were placed onto the conveyor by automated mechanical transfer 300. Toothbrush bodies 12 are then transferred to the second conveyor 420 from first conveyor 410. The transfer from first conveyor 410 to second conveyor 420 can occur in a number of ways including, e.g., first conveyor 410 feeding toothbrush bodies directly onto second conveyor 420 arranged perpendicularly to first conveyor 410, as shown in Fig. 4; automated mechanical transfer 300 picking the toothbrush bodies, e.g., the array 16 of toothbrush bodies 12a-12e, from first conveyor 410 and placing the toothbrush bodies onto second conveyor 420, as shown in Figs. 5 and 6; and combinations thereof. Automated mechanical transfer 300 is capable of orienting the toothbrush bodies throughout the manufacturing process.

Tufter 200, includes a plurality of tuft insertion devices capable of inserting a plurality of tufts of bristles into the head portion of the toothbrush body. Tufter 200 receives an oriented toothbrush body 12, and inserts a plurality of tufts of bristles into the head portion 4 of the toothbrush body 12 to form a finished toothbrush 30. Tufter 200 can also trim the bristles and end rounding the bristle filaments of head portion 4.

Referring to Fig. 2, second automated mechanical transfer 310 automatically picks toothbrushes 30 from tufter 200 and places them on third conveyor 480 where they move to packaging machine 500. Preferably second automated mechanical transfer 310 maintains the orientation and order of the toothbrushes such that control over the color variety is maintained. As a result, the color mixture set at the molding operation can be maintained throughout the toothbrush manufacturing process up to and including the step of packaging the toothbrushes. Packaging machine 500 packages each individual toothbrush into a package (e.g., a blister pack), and can also be configured to package a plurality of toothbrushes into a single package or a plurality of the individually packaged toothbrushes into a second package.

Apparatus 10 can also include a variety of additional processing units including, e.g., a second packaging machine for packaging the individually packaged toothbrushes into a second package such that the second package includes a variety of differently colored individually packaged toothbrushes.

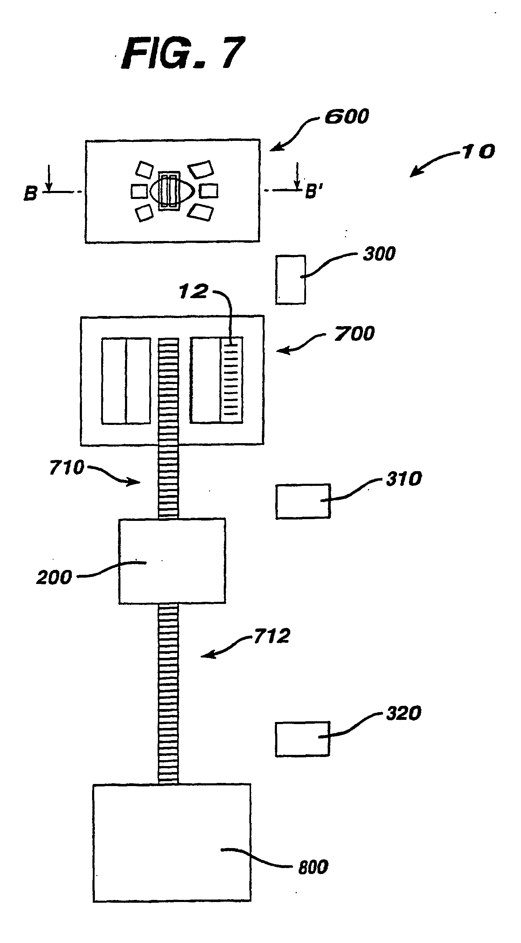

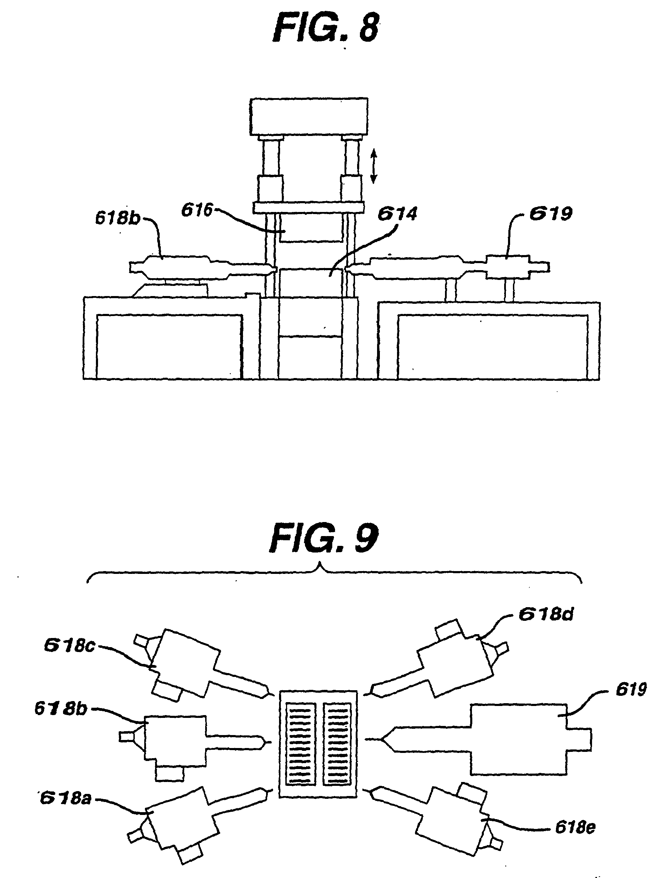

A second apparatus 90 for manufacturing toothbrushes having different colored bodies, is shown in Figs. 7-12. Features that are in common with apparatus 10 shown in Figs. 2-6 are designated with the same reference numerals. Referring to Figs. 7 and 8, apparatus 90 includes vertically mounted injection molding unit 600, which forms toothbrush bodies, and automated mechanical transfer 300, which removes the molded bodies from molding unit 600 and transfers them to a cooling station 700. Automated mechanical transfer 300 then selects toothbrush bodies 12 from cooling station 700 so as to create an array of differently colored toothbrush bodies, e.g., an array of five toothbrush bodies that includes blue, green, red, purple, and yellow toothbrush bodies. The automated mechanical transfer can be programmed to select any number of toothbrush bodies in a variety of color combinations. Automated mechanical transfer 300 then places the selected array onto conveyor 710, which feeds individual toothbrush bodies 12 to tufter 200. After tufter 200 secures tufts of bristles to the toothbrush body to form finished toothbrush 30, a second automated mechanical transfer 310 picks finished toothbrush 30 and places it on second conveyor 712. Second conveyor 712 moves toothbrush 30 to packaging machine 800 where the toothbrush is packaged. Optionally, third automated mechanical transfer 320 selectively provides toothbrushes 30 to packaging machine 800.

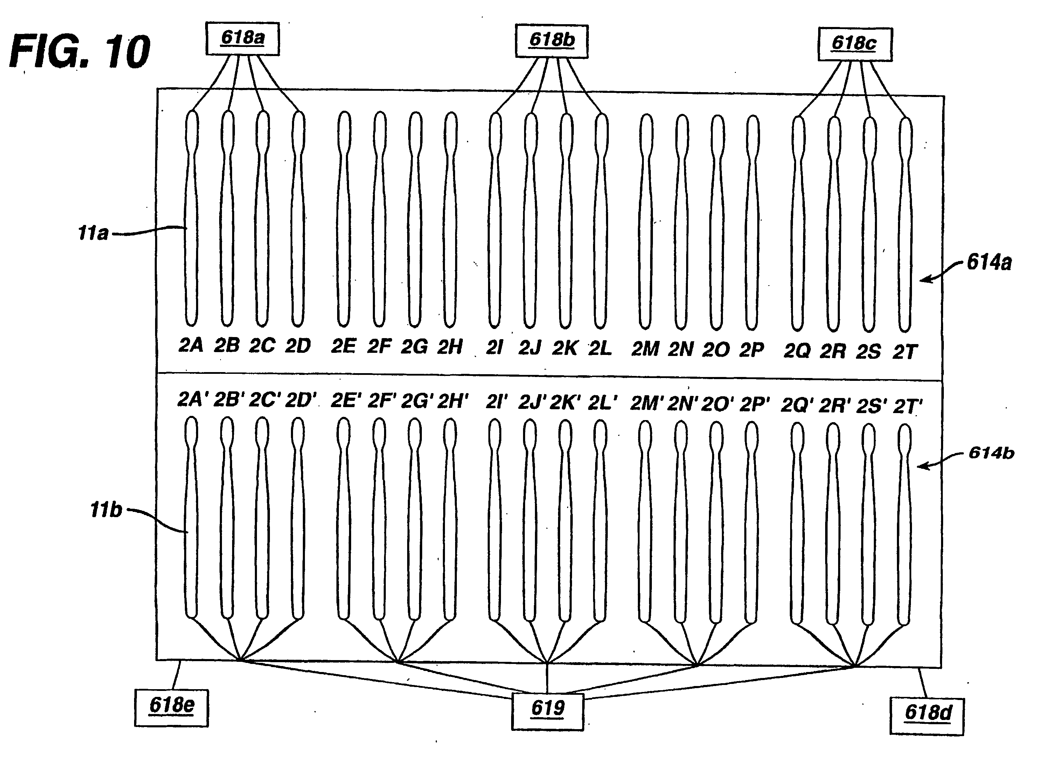

Vertically mounted injection molding unit 600 includes a stationary mold part 614 and a mobile mold part 616, as shown in Figs. 8-10. Mold parts 614, 616 are arranged such that mobile mold part 616 travels along a vertical path between an open position, (as shown in Fig. 8) in which the mold parts 614, 616 are separated by a distance to allow automated mechanical transfer 300 access to the formed bodies 12, and a closed position in which mold parts 614, 616 are in sealing contact with each other. Referring to Fig. 10, mold part 614 includes a portion of a first set 614a of mold cavities A-T, each of which defines a portion 11a of a toothbrush body. Each of five injection units 618a-e is in fluid communication with four of the twenty cavities 2A-2T, such that each injection unit 618a-e is capable of injecting a molding compound into four of the twenty cavities.

Referring to Fig. 10, injection unit 618a is in fluid communication with mold cavities 2A-2D; injection unit 618b is in fluid communication with mold cavities 2I-2L; injection unit 618c is in fluid communication with mold cavities 2Q-2T; injection unit 618d is in fluid communication with mold cavities 2M-2P; and injection unit 618e is in fluid communication with mold cavities 2E-2H.

Preferably each injection unit injects a different molding compound into its corresponding cavities such that the toothbrush bodies formed from each of the different molding compounds exhibit different properties, e.g., color.

Injection molding unit 600 can further include a second set 614b of mold cavities 2A'-2H', each of which defines a second portion 11b of a toothbrush body 12, as shown in Fig. 10. A sixth injection unit 619, in fluid communication with cavities 2A'-2T', is capable of injecting molding compound into each mold cavity 2A'-2T'. The molding compound injected by the sixth injection unit is preferably of a material that, upon molding, exhibits a property that is distinct from that of the portions of the toothbrush body formed in mold cavities 2A-2T. Portions 11b of toothbrush bodies 12 formed in mold cavities 2A'-2T' are then transferred to first set 614a of mold cavities 2A-2T where processing continues as described above.

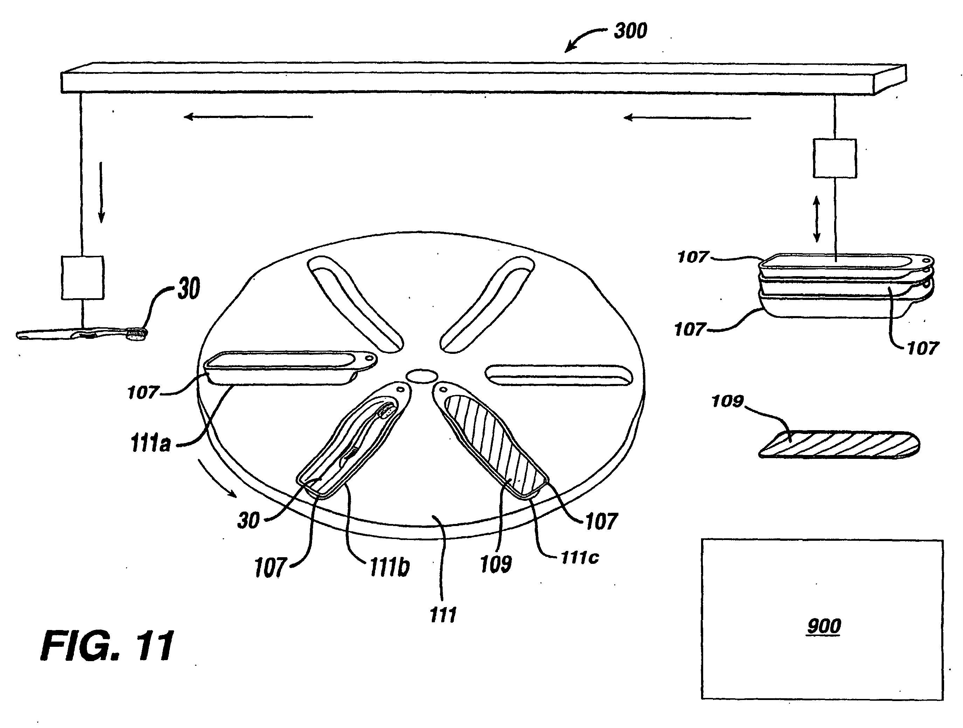

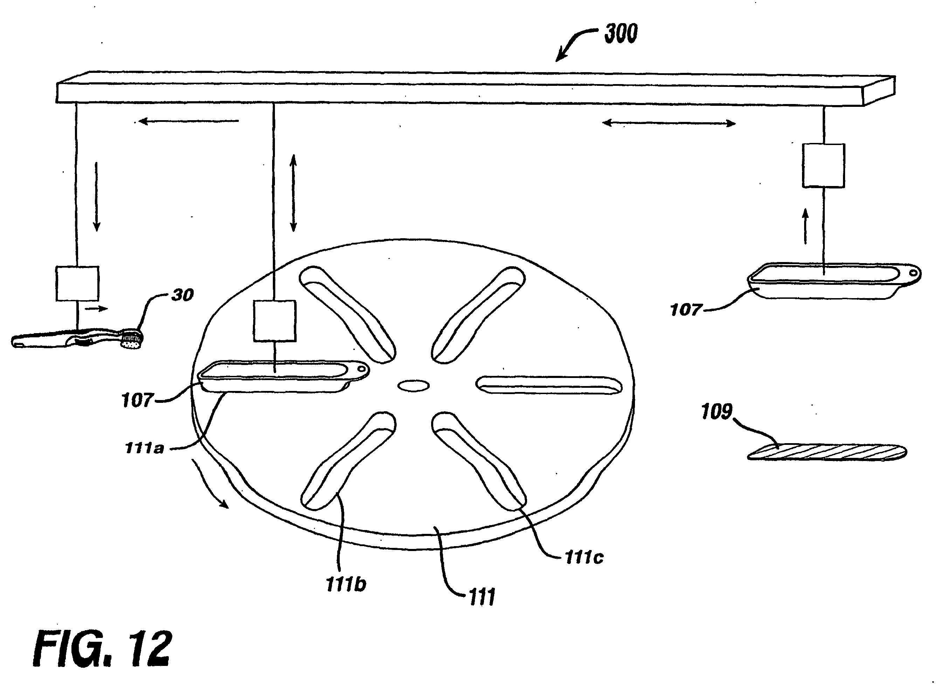

Referring to Figs. 11 and 12, one embodiment of the packaging operation is shown in which automated mechanical transfer 300 picks a blister pack 107 and places it in position 111a of turret 111 where it remains ready to receive finished toothbrush 30. Automated mechanical transfer 300 then returns to tufter 200 and retrieves a finished toothbrush 30. Automated mechanical transfer 300 then transfers finished toothbrush to blister pack 107 waiting at index position 111a on turret 111, and places finished toothbrush 30 into blister pack 107. Blister pack 107, filled with finished toothbrush 30, is then indexed to full position 111b during which time automated mechanical transfer 300 retrieves a cover 109, e.g., a film or card. Automated mechanical transfer 300 then returns to the filled blister pack 107 at index position 111b and places cover 109 onto the filled blister pack 107. Automatic mechanical transfer 300 then transfers the blister pack assembly, shown at index position 111c, to sealing unit 900, where the blister pack assembly is sealed to form a package around the toothbrush. Automated mechanical transfer 300 waits for the completion of the sealing operation and then transfers the sealed package to a transport mechanism where the sealed package can undergo further processing, e.g., additional packaging or storage. Automated mechanical transfer 300 then returns to the ready position where it waits to start the process again with a newly formed set of injection molded toothbrush bodies. The automated mechanical transfer and packaging apparatus of Figs. 11 and 12 can also be incorporated into apparatus 10.

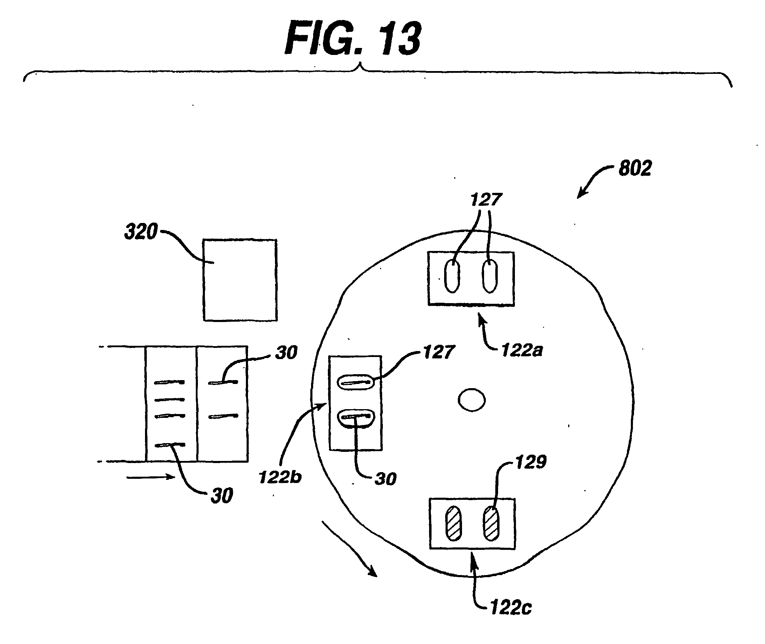

Referring to Fig. 13, another embodiment of packaging operation is shown. Packaging unit 802 forms blister packs 127 at position 122a and rotates formed blister pack 127 to position 122b. A second automated transfer 320 picks toothbrush 30 and places toothbrush 30 into blister pack 127. Packaging unit 802 rotates the filled blister pack to position 122c, applies a cover 129 to filled blister pack 127, and seals the assembly to form a packaged toothbrush 131. If necessary, packaging unit 802 separates e.g., by punching or cutting, blister pack 127 from other blister packs with which it may be associated.

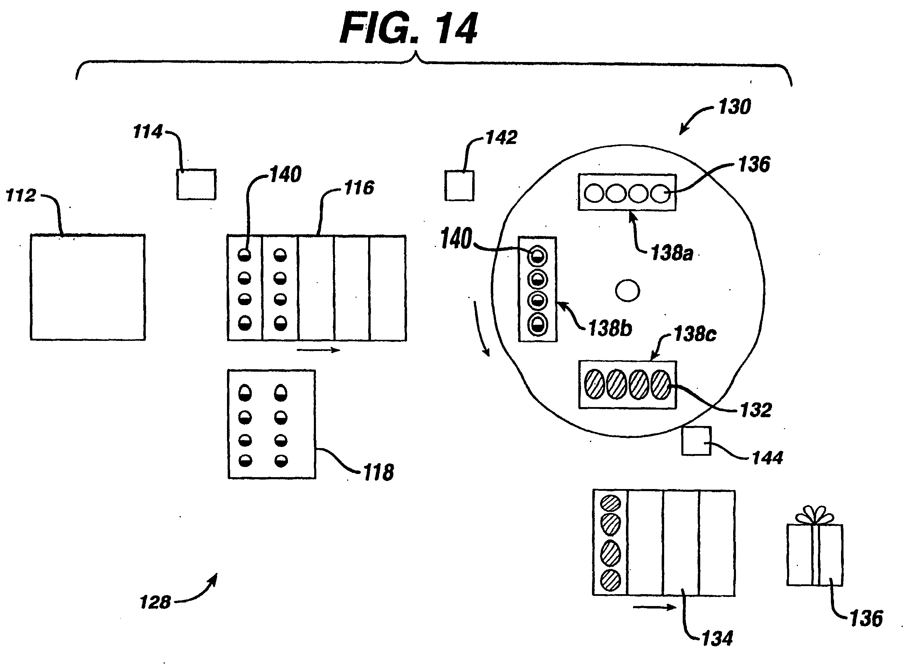

Referring to Fig. 14, another automated process 128 of the invention is shown in which first automated mechanical transfer 114 removes molded articles 140 from infection molding unit 112, and transports articles 140 to cooling conveyor 116 or cooling station 118. Optionally, automated mechanical transfer 114 selects articles based upon a predetermined criteria (e.g., color) and provides the selected articles (e.g., five articles each having a different color) in the form of an array to packaging machine 130, or to conveyor 116, which moves articles 140 to packaging machine 130, such that articles having predetermined properties can be packaged substantially simultaneously. A second automated mechanical transfer 142 can assist in transferring articles 140 from conveyor 116 to blister pack 136 at first position 138b on packaging machine 130. A third automated mechanical transfer 144 then transfers packaged articles 142 to second conveyor 134 and/or second packaging machine 136 for additional packaging.

Other embodiments are within the claims. For example, the automated processes of the invention can include a hot tufting operation in which tufts of bristles are secured to the body of the toothbrush by hot welding the bristle material to the toothbrush body. Examples of hot tufting operations are disclosed in U.S. Patent No. 5,143,424 (Boucherie). The bristles can also be secured to the toothbrush body during the molding operation as disclosed, e.g., in U.S. Patent Nos. 5,458,400 (Meyer), 5,609,890 (Boucherie), and 5,474,366 (Strütt et al.).

In addition, the apparatus can include one or more automated mechanical transfers for moving the toothbrush bodies and toothbrushes throughout the various stages of the processes disclosed.

## Claims

1. An apparatus for manufacturing toothbrushes comprising:
(a) a molding unit for substantially simultaneously molding toothbrush bodies;
(b) an element that removes toothbrush bodies from said molding unit;
(c) a tufter for securing tufts of bristles to toothbrush bodies to form toothbrushes; **characterized in that** said apparatus comprises:
(d) a transport for automatically moving toothbrush bodies from said removal element to said tufter.

2. The apparatus of claim 1, wherein said removal element is capable of removing toothbrush bodies from said mold in the form of an array and maintaining the toothbrush bodies in the array.

3. The apparatus of claim 2, wherein said transport is capable of sequentially providing individual toothbrush bodies from an array of toothbrush bodies to said tufter.

4. The apparatus of claim 1, wherein said transport comprises an element that selects toothbrush bodies having different properties, and wherein said transport automatically moves the selected toothbrush bodies to said tufter.

5. The apparatus of claim 1, wherein said transport comprises an element that selects toothbrush bodies having different colors, and wherein said transport automatically moves selected toothbrush bodies to said tufter.

6. The apparatus of claim 1, wherein said molding unit comprises:
a first cavity defining a toothbrush body;
a first injection unit in fluid communication with said first cavity; and
a second injection unit also in fluid communication with said first cavity.

7. The apparatus of claim 6, wherein said molding unit further comprises:
(a) a second cavity defining a toothbrush body; and
(b) a third cavity defining a toothbrush body,
said first injection unit also being in fluid communication with said second cavity, and
said second injection unit also being in fluid communication with said third cavity,
said injection units being capable of substantially simultaneously
(i) injecting a first molding compound having a first property into said second cavity to form a toothbrush body having a first property,
(ii) injecting a second molding compound having a second property into said third cavity to form a toothbrush body having a second property, and
(iii) injecting either the first or the second molding compound into said first cavity to form a toothbrush body having a property corresponding to the injected molding compound.

8. The apparatus of claim 1, wherein said molding unit comprises:
(a) a first cavity defining a toothbrush body; and
(b) a second cavity defining a toothbrush body,
said first injection unit being in fluid communication with said first cavity, and
said second injection unit being in fluid communication with said second cavity,
said injection units being capable of
(i) injecting a first molding compound having a first property into said first cavity to form a toothbrush body having a first property, and
(ii) injecting a second molding compound having a second property into said second cavity to form a toothbrush body having a second property.

9. The apparatus of claim 8, wherein said first cavity and said second cavity define substantially similar toothbrush bodies.

10. The apparatus of claim 8, wherein said injection units are capable of substantially simultaneously
(i) injecting a first molding compound into said first cavity, and
(ii) injecting a second molding compound into said second cavity.

11. The apparatus of claim 1, wherein said transport comprises:
a first conveyor for moving an array of toothbrush bodies to said tufter; and
a second conveyor for receiving an array of toothbrush bodies from said removal element and moving the array to said first conveyor.

12. The apparatus of claim 1, wherein said element for removing and said transport are provided in the form of an automated mechanical transfer unit.

13. The apparatus of claim 1, wherein said transport is capable of selecting toothbrush bodies to create an array of toothbrush bodies having different properties.

14. The apparatus of claim 13, wherein said properties are colors.

15. The apparatus of claim 1, further comprising:
a packaging machine that packages individual toothbrushes; and
a second transport for automatically moving toothbrushes from said tufter to said packaging machine.

16. The apparatus of claim 15, wherein said first transport, said removal element, and said second transport are provided in the form of an automated mechanical transfer unit.

17. The apparatus of claim 15, further comprising a second packaging machine for automatically packaging packaged toothbrushes into a second package such that the second package contains a plurality of toothbrushes having different properties.

18. The apparatus of claim 17, wherein said properties are colors.

19. A process for forming toothbrushes having different properties, said process comprising:
substantially simultaneously forming toothbrush bodies having different properties in one mold; and securing tufts of bristles to said toothbrush bodies to form toothbrushes having different properties; said process **characterized by** automatically transporting said toothbrush bodies to a tufter.

20. The process of claim 19, wherein said properties are colors

21. The process of claim 19, wherein said step of forming toothbrush bodies comprises forming toothbrush bodies substantially similar in shape.

22. The process of claim 19, further comprising
automatically transporting said toothbrushes from said tufter to a packaging machine; and
automatically packaging said toothbrushes.

23. The process of claim 19, further comprising selecting said toothbrush bodies prior to automatically transporting said toothbrush bodies to a tufter.

24. The process of claim 19, further comprising selecting said toothbrush bodies to create an array of differently colored toothbrush bodies prior to automatically transporting said toothbrush bodies to a tufter.

## Patentansprüche

1. Vorrichtung zum Herstellen von Zahnbürsten, wobei die Vorrichtung folgendes umfasst:
(a) eine Formeinheit zum im Wesentlichen gleichzeitigen Formen von Zahnbürstenkörpern;
(b) ein Element, das Zahnbürstenkörper von der genannten Formeinheit entfernt;
(c) eine Büschelbildungseinrichtung zur Sicherung von Borstenbüscheln an Zahnbürstenkörpern zur Bildung von Zahnbürsten; **dadurch gekennzeichnet, dass** die genannte Vorrichtung folgendes umfasst:
(d) eine Transporteinrichtung zum automatischen Befördern von Zahnbürstenkörpern von dem genannten Entfernungselement zu der genannten Büschelbildungseinrichtung .

2. Vorrichtung nach Anspruch 1, wobei das genannte Entfernungselement in der Lage ist, Zahnbürstenkörper von der genannten Form in Form einer Anordnung zu entfernen und die Zahnbürstenkörper in der Anordnung zu halten.

3. Vorrichtung nach Anspruch 2, wobei die genannte Transporteinrichtung sequentiell einzelne Zahnbürstenkörper aus einer Anordnung von Zahnbürstenkörpern an die genannte Büschelbildungseinrichtung vorsehen kann.

4. Vorrichtung nach Anspruch 1, wobei die genannte Transporteinrichtung ein Element umfasst, das Zahnbürstenkörper mit unterschiedlichen Eigenschaften auswählt, und wobei die genannte Transporteinrichtung die ausgewählten Zahnbürstenkörper automatisch an die genannte Büschelbildungseinrichtung befördert.

5. Vorrichtung nach Anspruch 1, wobei die genannte Transporteinrichtung ein Element umfasst, das Zahnbürstenkörper mit unterschiedlichen Farben auswählt, und wobei die genannte Transporteinrichtung die ausgewählten Zahnbürstenkörper automatisch an die genannte Büschelbildungseinrichtung befördert.

6. Vorrichtung nach Anspruch 1, wobei die genannte Formeinheit folgendes umfasst:
einen ersten Hohlraum, der einen Zahnbürstenkörper definiert;
eine erste Injektionseinheit, die sich in Fluidverbindung mit dem genannten ersten Hohlraum befindet; und
eine zweite Injektionseinheit, die sich ebenfalls in Fluidverbindung mit dem genannten ersten Hohlraum befindet.

7. Vorrichtung nach Anspruch 6, wobei die genannte Formeinheit ferner folgendes umfasst:
(a) einen zweiten Hohlraum, der einen Zahnbürstenkörper definiert; und
(b) einen dritten Hohlraum, der einen Zahnbürstenkörper definiert;
wobei die genannte erste Injektionseinheit ferner in Fluidverbindung mit dem genannten zweiten Hohlraum gehalten wird; und
wobei die genannte zweite Injektionseinheit ferner in Fluidverbindung mit dem genannten dritten Hohlraum gehalten wird;
wobei die genannten Injektionseinheiten in der Lage sind, im Wesentlichen gleichzeitig:
(i) eine erste Formzusammensetzung mit einer ersten Eigenschaft in den genannten zweiten Hohlraum einzuspritzen, so dass ein Zahnbürstenkörper mit einer ersten Eigenschaft gebildet wird;
(ii) eine zweite Formzusammensetzung mit einer zweiten Eigenschaft in den genannten dritten Hohlraum einzuspritzen, so dass ein Zahnbürstenkörper mit einer zweiten Eigenschaft gebildet wird; und
(iii) entweder die erste oder die zweite Formzusammensetzung in den genannten ersten Hohlraum einzuspritzen, so dass ein Zahnbürstenkörper mit einer Eigenschaft gebildet wird, die der injizierten Formzusammensetzung entsprechen.

8. Vorrichtung nach Anspruch 1, wobei die genannte Formeinheit folgendes umfasst:
(a) einen ersten Hohlraum, der einen Zahnbürstenkörper definiert; und
(b) einen zweiten Hohlraum, der einen Zahnbürstenkörper definiert;
wobei die genannte erste Injektionseinheit eine Fluidverbindung mit dem genannten ersten Hohlraum aufweist; und
wobei die genannte zweite Injektionseinheit eine Fluidverbindung mit dem genannten zweiten Hohlraum aufweist;
wobei die genannten Injektionseinheiten in der Lage sind:
(i) eine erste Formzusammensetzung mit einer ersten Eigenschaft in den genannten ersten Hohlraum einzuspritzen, so dass ein Zahnbürstenkörper mit einer ersten Eigenschaft gebildet wird;
(ii) eine zweite Formzusammensetzung mit einer zweiten Eigenschaft in den genannten zweiten Hohlraum einzuspritzen, so dass ein Zahnbürstenkörper mit einer zweiten Eigenschaft gebildet wird.

9. Vorrichtung nach Anspruch 8, wobei der genannte erste Hohlraum und der genannte zweite Hohlraum im Wesentlichen gleiche Zahnbürstenkörper definieren.

10. Vorrichtung nach Anspruch 8, wobei die genannten Injektionseinheiten in der Lage sind, im Wesentlichen gleichzeitig:
(i) eine erste Formzusammensetzung in den genannten ersten Hohlraum einzuspritzen; und
(ii) eine zweite Formzusammensetzung in den genannten zweiten Hohlraum einzuspritzen.

11. Vorrichtung nach Anspruch 1, wobei die genannte Transporteinrichtung folgendes umfasst:
eine erste Fördereinrichtung zum Befördern einer Anordnung von Zahnbürstenkörpern an die genannte Büschelbildungseinrichtung ; und
eine zweite Fördereinrichtung zum Empfangen einer Anordnung von Zahnbürstenkörpern von dem Entfernungselement und Befördern der Anordnung zu der genannten ersten Fördereinrichtung.

12. Vorrichtung nach Anspruch 1, wobei das genannte Element zum Entfernen und die genannte Transporteinrichtung in Form einer automatisierten mechanischen Transfereinheit vorgesehen sind.

13. Vorrichtung nach Anspruch 1, wobei die genannte Transporteinrichtung in der Lage ist, Zahnbürstenkörper für die Erzeugung einer Anordnung von Zahnbürstenkörpern mit unterschiedlichen Eigenschaften auszuwählen.

14. Vorrichtung nach Anspruch 13, wobei es sich bei den genannten Eigenschaften um Farben handelt.

15. Vorrichtung nach Anspruch 1, wobei die Vorrichtung ferner folgendes umfasst:
eine Verpackungsvorrichtung, die die einzelnen Zahnbürsten verpackt; und
eine zweite Transporteinrichtung zum automatischen Befördern der Zahnbürsten von der Büschelbildungseinrichtung zu der genannten Verpackungseinrichtung.

16. Vorrichtung nach Anspruch 15, wobei die genannte erste Transporteinrichtung, das genannte Entfernungselement und die genannte zweite Transporteinrichtung in Form einer automatisierten mechanischen Transfereinheit vorgesehen sind.

17. Vorrichtung nach Anspruch 15, wobei die Vorrichtung ferner eine zweite Verpackungsvorrichtung zum automatischen Verpacken verpackter Zahnbürsten in einer zweiten Packung umfasst, so dass die zweite Packung eine Mehrzahl von Zahnbürsten mit unterschiedlichen Eigenschaften umfasst.

18. Vorrichtung nach Anspruch 17, wobei es sich bei den genannten Eigenschaften um Farben handelt.

19. Verfahren zur Herstellung von Zahnbürsten mit unterschiedlichen Eigenschaften, wobei das Verfahren folgendes umfasst:
das im Wesentlichen gleichzeitige Bilden von Zahnbürstenkörpern mit unterschiedlichen Eigenschaften in einer Form; und Befestigen von Borstenbüscheln an den genannten Zahnbürstenkörpern zur Herstellung von Zahnbürsten mit unterschiedlichen Eigenschaften; wobei das genannte Verfahren **dadurch gekennzeichnet ist, dass** die genannten Zahnbürstenkörper automatisch zu einer Büschelbildungseinrichtung befördert werden.

20. Verfahren nach Anspruch 19, wobei es sich bei den genannten Eigenschaften um Farben handelt.

21. Verfahren nach Anspruch 19, wobei der genannte Schritt des Herstellens von Zahnbürstenkörpern das Herstellen der Zahnbürstenkörper mit im Wesentlichen der gleichen Form umfasst.

22. Verfahren nach Anspruch 19, wobei das Verfahren ferner folgendes umfasst:
das automatische Befördern der genannten Zahnbürsten von der genannten Büschelbildungseinrichtung zu einer Verpackungsvorrichtung; und
das automatische Verpacken der genannten Zahnbürsten.

23. Verfahren nach Anspruch 19, wobei das genannte Verfahren ferner die Auswahl der genannten Zahnbürstenkörper vor dem automatischen Befördern der genannten Zahnbürstenkörper an eine Büschelbildungseinrichtung umfasst.

24. Verfahren nach Anspruch 19, wobei das genannte Verfahren ferner die Auswahl der genannten Zahnbürstenkörper umfasst, so dass eine Anordnung verschiedenfarbiger Zahnbürstenkörper vor dem automatischen Befördern der genannten Zahnbürstenkörper an eine Büschelbildungseinrichtung umfasst.

## Revendications

1. Appareil pour fabriquer des brosses à dents, comprenant :
(a) une unité de moulage pour mouler sensiblement simultanément des corps de brosse à dents ;
(b) un élément qui enlève les corps de brosse à dents depuis ladite unité de moulage ;
(c) un poseur de touffes afin d'attacher des touffes de poils sur des corps de brosse à dents pour former des brosses à dents, **caractérisé en ce que** ledit appareil comprend :
(d) un dispositif de transport pour déplacer automatiquement des corps de brosse à dents depuis ledit élément d'enlèvement vers ledit poseur de touffes.

2. Appareil selon la revendication 1, dans lequel ledit élément d'enlèvement est capable d'enlever des corps de brosse à dents depuis ledit moule sous la forme d'une rangée, et de maintenir les corps de brosse à dents dans la rangée.

3. Appareil selon la revendication 2, dans lequel ledit dispositif de transport est capable d'amener en séquence des corps de brosse à dents individuels depuis une rangée de corps de brosse à dents audit poseur de touffes.

4. Appareil selon la revendication 1, dans lequel ledit dispositif de transport comprend un élément qui choisit des corps de brosse à dents ayant des propriétés différentes, et dans lequel ledit dispositif de transport déplace automatiquement les corps de brosse à dents choisis audit poseur de touffes.

5. Appareil selon la revendication 1, dans lequel ledit dispositif de transport comprend un élément qui choisit des corps de brosse à dents ayant des couleurs différentes, et dans lequel ledit dispositif de transport déplace automatiquement les corps de brosse à dents choisis audit poseur de touffes.

6. Appareil selon la revendication 1, dans lequel ladite unité de moulage comprend :
une première cavité définissant un corps de brosse à dents ;
une première unité d'injection, en communication de fluide avec ladite première cavité ; et
une deuxième unité d'injection également en communication de fluide avec ladite première cavité.

7. Appareil selon la revendication 6, dans lequel ladite unité de moulage comprend encore :
(a) une deuxième cavité définissant un corps de brosse à dents ; et
(b) une troisième cavité définissant un corps de brosse à dents,
ladite première unité d'injection étant également en communication de fluide avec ladite deuxième cavité,
ladite deuxième unité d'injection étant également en communication de fluide avec ladite troisième cavité,
lesdites deux unités d'injection étant capables, sensiblement simultanément :
(i) d'injecter un premier composé de moulage ayant une première propriété dans ladite deuxième cavité pour former un corps de brosse à dents ayant une première propriété,
(ii) d'injecter un deuxième composé de moulage ayant une deuxième propriété dans ladite troisième cavité pour former un corps de brosse à dents ayant une deuxième propriété, et
(iii) d'injecter soit le premier soit le deuxième composé de moulage dans ladite première cavité pour former un corps de brosse à dents ayant une propriété qui correspond au composé de moulage injecté.

8. Appareil selon la revendication 1, dans lequel ladite unité de moulage comprend :
(a) une première cavité définissant un corps de brosse à dents ; et
(b) une deuxième cavité définissant un corps de brosse à dents,
ladite première unité d'injection étant en communication de fluide avec ladite première cavité, et
ladite deuxième unité d'injection étant en communication de fluide avec ladite deuxième cavité, et
lesdites unités d'injection étant capables :
(i) d'injecter un premier composé de moulage ayant une première propriété dans ladite première cavité pour former un corps de brosse à dents ayant une première propriété, et
(ii) d'injecter un deuxième composé de moulage ayant une deuxième propriété dans ladite deuxième cavité pour former un corps de brosse à dents ayant une deuxième propriété.

9. Appareil selon la revendication 8, dans lequel ladite première cavité et ladite deuxième cavité définissent des corps de brosse à dents sensiblement similaires.

10. Appareil selon la revendication 8, dans lequel lesdites unités d'injection sont capables, sensiblement simultanément :
(i) d'injecter un premier composé de moulage dans ladite première cavité, et
(ii) d'injecter un deuxième composé de moulage dans ladite deuxième cavité.

11. Appareil selon la revendication 1, dans lequel ledit dispositif de transport comprend :
un premier convoyeur pour déplacer une rangée de corps de brosse à dents vers ledit poseur de touffes ; et
un deuxième convoyeur pour recevoir une rangée de corps de brosse à dents depuis ledit élément d'enlèvement, et déplacer la rangée audit premier convoyeur.

12. Appareil selon la revendication 1, dans lequel ledit élément d'enlèvement et ledit dispositif de transport sont prévus sous la forme d'une unité de transfert mécanique automatique.

13. Appareil selon la revendication 1, dans lequel ledit dispositif de transport est capable de choisir des corps de brosse à dents pour engendrer une rangée de corps de brosse à dents ayant des propriétés différentes.

14. Appareil selon la revendication 13, dans lequel lesdites propriétés sont des couleurs.

15. Appareil selon la revendication 1, comprenant encore :
une machine d'emballage qui emballe des brosses à dents individuelles ; et
un deuxième dispositif de transport pour déplacer automatiquement des brosses à dents depuis ledit poseur de touffes à ladite machine d'emballage.

16. Appareil selon la revendication 15, dans lequel ledit premier dispositif de transport, ledit élément d'enlèvement, et ledit deuxième dispositif de transport sont prévus sous la forme d'une unité de transfert mécanique automatique.

17. Appareil selon la revendication 15, comprenant encore une deuxième machine d'emballage pour emballer automatiquement des brosses à dents emballées dans un deuxième emballage, tel que le deuxième emballage contient une pluralité de brosses à dents ayant des propriétés différentes.

18. Appareil selon la revendication 17, dans lequel lesdites propriétés sont des couleurs.

19. Procédé pour former des brosses à dents ayant différentes propriétés, ledit procédé comprenant les opérations consistant à former sensiblement simultanément des corps de brosse à dents ayant des propriétés différentes dans un moule, et à attacher des touffes de poils sur lesdits corps de brosse à dents pour former des brosses à dents ayant différentes propriétés ; ledit procédé étant **caractérisé par** un transport automatique desdits corps de brosse à dents à un poseur de touffes.

20. Procédé selon à la revendication 19, dans lequel lesdites propriétés sont des couleurs.

21. Procédé selon à la revendication 19, dans lequel ladite opération de formation de corps de brosses à dents comprend la formation de corps de brosse à dents de formes sensiblement similaires.

22. Procédé selon la revendication 19, comprenant encore les opérations consistant à :
transporter automatiquement lesdites brosses à dents depuis ledit poseur de touffes jusqu'à une machine d'emballage ; et
emballer automatiquement lesdites brosses à dents.

23. Procédé selon la revendication 19, comprenant en outre l'opération consistant à sélectionner lesdits corps de brosse à dents avant de transporter automatiquement lesdits corps de brosse à dents à un poseur de touffes.

24. Procédé selon la revendication 19, comprenant encore l'opération consistant à sélectionner lesdits corps de brosse à dents pour produire une rangée de corps de brosse à dents de couleurs différentes avant de transporter automatiquement lesdits corps de brosse à dents à un poseur de touffes.
